# EUROPÄISCHE PATENTSCHRIFT

(11) **EP 4 568 847 B1**
(45) Veröffentlichungstag und Bekanntmachung des Hinweises auf die Patenterteilung: **08.07.2026**
(21) Anmeldenummer: 23748065.2
(22) Anmeldetag: 26.07.2023
(51) Int. Cl.: B60K 1/04

(54) **TRÄGER ZUM LAGERN EINES ELEKTRISCHEN ENERGIESPEICHERS AN EINEM RAHMEN EINES NUTZFAHRZEUGS**
SUPPORT FOR STORING AN ELECTRIC ENERGY STORAGE DEVICE ON THE FRAME OF A UTILITY VEHICLE
SUPPORT DE RANGEMENT D'UN DISPOSITIF DE STOCKAGE D'ÉNERGIE ÉLECTRIQUE SUR LE CHÂSSIS D'UN VÉHICULE UTILITAIRE

(30) Priorität: 12.08.2022 DE 102022120470
(43) Veröffentlichungstag der Anmeldung: 18.06.2025
(73) Patentinhaber: Daimler Truck AG, 70771 Leinfelden-Echterdingen (DE)
(72) Erfinder: NOWROTH, André, 70771 Leinfelden-Echterdingen (DE); LIST, Mario, 70771 Leinfelden-Echterdingen (DE); BERGELT, Carsten, 70771 Leinfelden-Echterdingen (DE); POPPLER, Christian, 70771 Leinfelden-Echterdingen (DE); MIELKE, Jan-Philipp, 70771 Leinfelden-Echterdingen (DE)
(74) Vertreter: JENSEN & SON
(86) Internationale Anmeldenummer: PCT/EP2023/070701
(87) Internationale Veröffentlichungsnummer: WO 2024/033085

(56) Entgegenhaltungen:
- WO-A1-2022/105014
- CN-U- 211 195 826
- CN-U- 216 153 582
- US-B2- 10 252 632

## Beschreibung

Die Erfindung betrifft einen Träger zum Lagern wenigstens eines elektrischen Energiespeichers an einem Rahmen eines Nutzfahrzeugs gemäß dem Oberbegriff von Patentanspruch 1.

Die CN 211195826 U offenbart eine Halterahmenanordnung für eine Fahrzeugbatterie. Des Weiteren ist der CN 216153582 U ein Rahmen für einen Energiespeicher als bekannt zu entnehmen.

Darüber hinaus zeigt die WO 2022/105014 A1 eine Wechselvorrichtung für eine Fahrzeugbatterie. Mit einer Befestigungsvorrichtung zur Befestigung der Batterie an einem Längsträger des Kraftfahrzeugs und umfasst eine Grundplatte, wobei zwischen Grundplatte und Batterie eine schwimmende Verbindung vorgesehen ist, um die Schwingungen der Batterie während der Fahrt zu mindern.

Aufgabe der vorliegenden Erfindung ist es, einen Träger zum Lagern wenigstens eines elektrischen Energiespeichers an einem Rahmen eines Nutzfahrzeugs zu schaffen, sodass ein besonders vorteilhaftes Unfallverhalten realisiert werden kann.

Diese Aufgabe wird durch einen Träger mit den Merkmalen des Patentanspruchs 1 gelöst. Vorteilhafte Ausgestaltungen mit zweckmäßigen Weiterbildungen der Erfindung sind in den übrigen Ansprüchen angegeben.

Die Erfindung betrifft einen auch als Trageinrichtung bezeichneten Träger zum Lagern und somit zum Tragen wenigstens eines elektrischen Energiespeichers an einem insbesondere als Leiterrahmen ausgebildeten Rahmen eines Nutzfahrzeugs, insbesondere eines Lastkraftwagens. Dies bedeutet, dass das Nutzfahrzeug in seinem vollständig hergestellten Zustand den elektrischen Energiespeicher, den Rahmen und den Träger aufweist. Über den Träger ist der elektrische Energiespeicher an dem Rahmen gelagert oder zu lagern, insbesondere derart, dass der elektrische Energiespeicher an dem Träger und der Träger an dem Rahmen gehalten ist. Mittels des elektrischen Energiespeichers kann elektrische Energie, insbesondere elektrochemisch, gespeichert werden. Insbesondere handelt es sich bei dem elektrischen Energiespeicher um eine Hochvolt-Komponente, deren elektrische Spannung, insbesondere elektrische Betriebs- oder Nennspannung, vorzugsweise größer als 50 Volt, insbesondere größer als 60 Volt, ist und ganz vorzugsweise mehrere hundert Volt beträgt. Das als Kraftwagen ausgebildete und einfach auch als Fahrzeug bezeichnete Nutzfahrzeug kann ein Elektrofahrzeug oder ein Hybridfahrzeug sein. Insbesondere kann das Nutzfahrzeug ein batterieelektrisches Fahrzeug oder ein Brennstoffzellenfahrzeug sein. Das auch als Kraftfahrzeug bezeichnete Nutzfahrzeug weist in seinem vollständig hergestellten Zustand wenigstens eine elektrische Maschine auf, mittels welcher das Nutzfahrzeug, insbesondere rein, elektrisch angetrieben werden kann. Dabei ist die elektrische Maschine mit der in dem elektrischen Energiespeicher gespeicherten oder zu speichernden, elektrischen Energie versorgbar, wodurch die elektrische Maschine in einem Motorbetrieb und somit als Elektromotor betrieben werden kann. Mittels des Elektromotors kann das Kraftfahrzeug, insbesondere rein, elektrisch angetrieben werden.

Der Träger weist einen Aufnahmebereich auf. Insbesondere ist der Aufnahmebereich durch den Träger, insbesondere direkt, begrenzt. Der elektrische Energiespeicher ist an dem Träger befestigbar oder befestigt. Außerdem ist der elektrische Energiespeicher in dem Aufnahmebereich aufnehmbar oder aufgenommen. Dies bedeutet, dass in vollständig hergestelltem Zustand des Nutzfahrzeugs der elektrische Energiespeicher in dem Aufnahmebereich aufgenommen ist, wobei der elektrische Energiespeicher an dem Träger befestigt ist. Insbesondere ist es denkbar, dass der elektrische Energiespeicher in dem Aufnahmebereich an dem Träger befestigbar oder befestigt ist. Somit ist der elektrische Energiespeicher unter Vermittlung des Trägers an dem Rahmen befestigbar oder befestigt und somit an dem Rahmen zu lagern oder gelagert.

Um nun ein besonders vorteilhaftes Unfallverhalten und somit eine besonders hohe Sicherheit realisieren zu können, ist es erfindungsgemäß vorgesehen, dass der Träger einen auf den Rahmen aufsetzbaren und demzufolge separat von dem Rahmen ausgebildeten Grundrahmen aufweist, welcher an dem auch als Fahrzeugrahmen bezeichneten Rahmen des Nutzfahrzeugs befestigbar oder befestigt ist. Außerdem begrenzt der Grundrahmen den Aufnahmebereich in Einbaulage des Trägers in Fahrzeughochrichtung des Nutzfahrzeugs nach unten, insbesondere direkt. Dabei nimmt der Träger seine Einbaulage in vollständig hergestelltem Zustand des mit dem Träger ausgestatteten Nutzfahrzeugs ein. Dies bedeutet, dass in der Einbaulage des Trägers und somit in vollständig hergestelltem Zustand des Nutzfahrzeugs der Träger an dem Rahmen befestigt ist, wobei insbesondere der Grundrahmen, insbesondere direkt, auf den Rahmen aufgesetzt und an dem Rahmen befestigt ist.

Der Träger weist außerdem einen separat von dem Grundrahmen und somit auch separat von dem Rahmen (Fahrzeugrahmen) ausgebildeten und, insbesondere in Fahrzeughochrichtung des Nutzfahrzeugs betrachtet, auf dem Grundrahmen angeordneten Tragkasten auf, welcher den Aufnahmebereich in Einbaulage des Trägers in Fahrzeugquerrichtung, insbesondere direkt, begrenzt, insbesondere beidseitig. Der Tragkasten ist in Einbaulage des Trägers in Fahrzeuglängsrichtung nach hinten hin an dem Grundrahmen über Konsolen abgestützt. Außerdem ist der Tragkasten über die Konsolen an dem Grundrahmen befestigt. Die Konsolen sind dazu ausgebildet, bei einer in Fahrzeuglängsrichtung nach hinten, mithin von vorne nach hinten wirkenden, unfallbedingten Kraftbeaufschlagung in Fahrzeuglängsrichtung nach hinten zu klappen und dadurch eine unfallbedingte Bewegung des Tragkasten in Fahrzeuglängsrichtung nach hinten freizugeben, mithin eine unfallbedingte Rückverlagerung des Tragkastens zu ermöglichen. Mit anderen Worten, kommt es zu einer in Fahrzeuglängsrichtung von vorne nach hinten auf das Nutzfahrzeug und somit insbesondere auf den Träger wirkenden und beispielsweise aus einer Frontalkollision des Nutzfahrzeugs resultierenden, unfallbedingten Kraftbeaufschlagung, so klappen die Konsolen insbesondere relativ zu dem Grundrahmen in Fahrzeuglängsrichtung nach hinten und geben dadurch den Tragkasten für eine in Fahrzeuglängsrichtung nach hinten und relativ zu dem Grundrahmen und vorzugsweise auch relativ zu dem Fahrzeugrahmen erfolgende Bewegung frei.

In vollständig hergestelltem Zustand des Nutzfahrzeugs weist dieses beispielsweise einen sich in Fahrzeuglängsrichtung nach vorne hin an den Träger anschließenden und insbesondere als Fahrerhaus ausgebildeten Aufbau auf, welcher separat von dem Fahrzeugrahmen und separat von dem Träger ausgebildet und insbesondere an dem Fahrzeugrahmen gelagert ist. Insbesondere dann, wenn es sich bei dem genannten Aufbau um das genannte Fahrerhaus handelt, kann beispielsweise insbesondere während einer Fahrt des Nutzfahrzeugs in dem Fahrerhaus (Aufbau) sich eine Person wie beispielsweise der Fahrer oder die Fahrerin des Nutzfahrzeugs aufhalten. Dadurch, dass die Konsolen bei der genannten, in Fahrzeuglängsrichtung nach hinten wirkenden, unfallbedingten Kraftbeaufschlagung in Fahrzeuglängsrichtung nach hinten wegklappen und somit den Tragkasten für eine unfallbedingte Rückverlagerung freigeben, ermöglichen die Konsolen eine in Fahrzeuglängsrichtung nach hinten erfolgende Bewegung des beispielsweise als ein Turm ausgebildeten oder einen Turm bildenden Tragkastens weg von dem Aufbau. Hierdurch kann beispielsweise eine übermäßige, unerwünschte Interaktion zwischen dem Tragkasten und dem Aufbau bei der unfallbedingten Kraftbeaufschlagung vermieden werden. Insbesondere kann hierdurch eine übermäßige, unfallbedingte Deformation, insbesondere des Fahrerhauses beziehungsweise Aufbaus, vermieden werden, sodass eine besonders hohe Sicherheit darstellbar ist. Die Erfindung ermöglicht somit einen bewussten Einsatz von Geometrien zur Erzeugung einer Kinematik, welche insbesondere umfasst, dass die Konsolen bei der genannten, unfallbedingten Kraftbeaufschlagung in Fahrzeuglängsrichtung nach hinten klappen, insbesondere wegklappen, und in der Folge eine Bewegung, insbesondere ein Klappen, des Tragkastens in Fahrzeuglängsrichtung nach hinten und insbesondere weg von dem Aufbau ermöglichen. Wieder mit anderen Worten ausgedrückt kann beispielsweise der Tragkasten dadurch, dass die Konsolen in Fahrzeuglängsrichtung nach hinten klappen, ebenfalls in Fahrzeuglängsrichtung nach hinten klappen, wenn es zu der genannten, in Fahrzeuglängsrichtung von vorne nach hinten wirkenden, unfallbedingten Kraftbeaufschlagung kommt. Die Konsolen stellen somit kostengünstige und bauraumgünstige Crashstrukturen dar, durch welche ein vorteilhaftes Unfallverhalten darstellbar ist.

In vorteilhafter Ausgestaltung der Erfindung ist der Tragkasten in Einbaulage des Trägers in Fahrzeuglängsrichtung des Nutzfahrzeugs nach vorne hin an einer an dem Grundrahmen vorgesehenen, vorderen Anschlagschiene abgestützt. Dadurch können unerwünschte Bewegungen des Tragkastens vermieden werden. Insbesondere kann dadurch eine besonders vorteilhafte, insbesondere in Fahrzeuglängsrichtung von vorne nach hinten erfolgende Bewegung des Tragkastens bei der unfallbedingten Kraftbeaufschlagung gewährleistet werden, sodass eine besonders hohe Sicherheit darstellbar ist.

Eine weitere Ausführungsform zeichnet sich dadurch aus, dass der Tragkasten, insbesondere in Fahrzeuglängsrichtung betrachtet, zwischen der vorderen Anschlagschiene und den hinteren Konsolen angeordnet ist. Dadurch kann bei der unfallbedingten Kraftbeaufschlagung eine besonders vorteilhafte Bewegung, insbesondere Rückverlagerung, des Tragkastens bewirkt werden, sodass eine besonders hohe Sicherheit darstellbar ist.

Offenbart ist in dieser Anmeldung auch ein zweiter, von dem erfindungsgemäßen Träger unabhängiger Aspekt, welcher jedoch mit dem erfindungsgemäßen Träger beziehungsweise dessen Ausführungsformen kombiniert werden kann. Bei dem zweiten Aspekt weist der Grundträger eine Längserstreckungsrichtung auf, welche in Einbaulage des Trägers in Fahrzeugquerrichtung des Nutzfahrzeugs verläuft. Hierunter ist insbesondere zu verstehen, dass der Grundrahmen eine in Fahrzeugquerrichtung verlaufende, erste Erstreckung, eine in Fahrzeuglängsrichtung verlaufende, zweite Erstreckung und eine in Fahrzeughochrichtung verlaufende, dritte Erstreckung aufweist, wobei die erste Erstreckung größer als die zweite Erstreckung und größer als die dritte Erstreckung ist, sodass die erste Erstreckung eine Längserstreckung des Grundrahmens ist, dessen Längserstreckung in Fahrzeugquerrichtung und somit entlang der Längserstreckungsrichtung verläuft. Dabei weist der Tragkasten beispielsweise in Längserstreckungsrichtung des Grundrahmens voneinander beabstandete und den Aufnahmebereich in Einbaulage des Trägers in Fahrzeugquerrichtung begrenzende Seitenelemente auf.

Eine Ausführungsform des zweiten Aspekts zeichnet sich dadurch aus, dass der Tragkasten wenigstens eine den Aufnahmebereich in Einbaulage des Trägers in Fahrzeuglängsrichtung nach vorne oder hinten begrenzende Strebe aufweist, welche separat von den Seitenelementen ausgebildet und mit den Seitenelementen verbunden ist. Dadurch kann auf besonders gewichtsgünstige Weise eine besonders hohe Steifigkeit des beispielsweise den zuvor genannten Turm bildenden Trägers realisiert werden.

Bei einer weiteren Ausführungsform des zweiten Aspekts ist es vorgesehen, dass die Strebe in Einbaulage des Trägers schräg zur Fahrzeugquerrichtung und schräg zur Fahrzeughochrichtung in einer durch die Fahrzeugquerrichtung und die Fahrzeughochrichtung aufgespannten Ebene verläuft.

Eine weitere Ausführungsform des zweiten Aspekts zeichnet sich dadurch aus, dass das jeweilige Seitenelement sich überkreuzende Strebenelemente aufweist, welche dreiecksförmige Durchgangsöffnungen des jeweiligen Seitenelements begrenzen.

Ein dritter, insbesondere unabhängiger, Aspekt betrifft ein Baukastensystem für mehrere Bauvarianten eines Trägers gemäß dem zweiten Aspekt. Das Baukastensystem gemäß dem dritten Aspekt weist den Grundrahmen als bauvariantenübergreifenden Grundrahmen und mehrere Tragrahmen auf, welche wahlweise miteinander und mit dem Grundrahmen verbindbar und in Einbaulage des Trägers in Fahrzeughochrichtung übereinander anordenbar sind und jeweils einen jeweiligen Aufnahmebereich für einen jeweiligen, elektrischen Energiespeicher begrenzen. Dabei sind die vorigen und folgenden Ausführungen zu dem Tragkasten des erfindungsgemäßen Trägers und zu dem Tragkasten des Trägers gemäß dem zweiten Aspekt ohne weiteres auch auf den jeweiligen Tragrahmen des Baukastensystems gemäß dem dritten Aspekt übertragbar und umgekehrt.

Bei einem insbesondere unabhängigen, vierten Aspekt ist es vorgesehen, dass der separat von dem Grundrahmen ausgebildete und auf dem Grundrahmen angeordnete und den Aufnahmebereich in Einbaulage des Trägers in Fahrzeugquerrichtung begrenzenden Tragkasten an einer am Grundrahmen vorgesehenen, vorderen Anschlagschiene, insbesondere in Einbaulage des Trägers in Fahrzeuglängsrichtung nach vorne hin, abgestützt und dadurch relativ zu dem Grundrahmen positioniert und über hintere, am Grundrahmen vorgesehene, Konsolen und über die Anschlagschiene am Grundrahmen befestigt ist. Dabei können die vorigen und folgenden Ausführungen zu den Konsolen des erfindungsgemäßen Trägers ohne weiteres auch auf die Konsolen des vierten Aspekts übertragen werden und umgekehrt, und die vorigen und folgenden Ausführungen zur vorderen Anschlagschiene des erfindungsgemäßen Trägers können ohne weiteres auch auf die Anschlagschiene des vierten Aspekts übertragen werden und umgekehrt.

Eine Ausführungsform des vierten Aspekts zeichnet sich dadurch aus, dass der Tragkasten zwischen der vorderen Anschlagschiene und den hinteren Konsolen angeordnet ist, insbesondere in Fahrzeuglängsrichtung des Nutzfahrzeugs betrachtet.

Bei einer weiteren Ausführungsform des vierten Aspekts umfasst der Träger einen zweiten Tragrahmen, welcher einen zweiten Aufnahmebereich für einen zweiten elektrischen Energiespeicher begrenzt. Der zweite Tragrahmen des vierten Aspekts ist separat von dem Grundrahmen und separat von dem ersten Tragkasten des vierten Aspekts ausgebildet und auf den ersten Tragrahmen des vierten Aspekts aufgesetzt, insbesondere aufgesteckt, insbesondere nach Art zweier aufeinander gestapelter und ineinander gesteckter Getränkekisten.

Dabei hat es sich als besonders vorteilhaft gezeigt, wenn der erste Tragkasten und der zweite Tragkasten des vierten Aspekts baugleich ausgebildet sind.

Der zweite Aspekt und der dritte Aspekt ermöglichen es, einen Kraftaufnahmepfad und eine Lagerung des elektrischen Energiespeichers in einem äußeren Bereich des einfach auch als Fahrzeug bezeichneten Nutzfahrzeugs umzusetzen und Kräfte über den auch als Grundträger bezeichneten Grundrahmen in den Fahrzeugrahmen einzuleiten. Hierdurch kann eine besonders hohe Steifigkeit des Trägers grundsätzlich über intelligente Dreiecksstrukturen umgesetzt werden, welche insbesondere durch die Strebenelemente realisiert werden können. Dadurch kann der Bauraumbedarf des Trägers insbesondere in Fahrzeuglängsrichtung besonders gering gehalten werden, wodurch besonders kurze Radstände des Nutzfahrzeugs dargestellt werden können. Außerdem kann eine modulare Bauweise des Trägers dargestellt werden, sodass auf besonders kostengünstige Weise varianteneffiziente Strukturen, mithin unterschiedliche Bauvarianten des Trägers, darstellbar sind. Somit kann beispielsweise wenigstens oder genau ein elektrischer Energiespeicher, insbesondere können ein bis drei Energiespeicher, mit einem besonders geringen Bauraum- und Materialaufwand verortet, mithin an dem Fahrzeugrahmen gelagert werden.

Vorzugsweise ist der elektrische Energiespeicher eine Batterie, insbesondere eine Hochvolt-Batterie.

Bei dem vierten Aspekt stellt die vordere Anschlagschiene einen Frontanschlag dar, wobei die hinteren Konsolen beispielsweise Zugkonsolen sein können. Der auch als Grundträger bezeichnete Grundrahmen mit dem Frontanschlag und den hinteren Konsolen ermöglicht ein zumindest nahezu lastfreies und einfaches Montieren und Positionieren insbesondere bei gleichzeitigem Toleranzausgleich. Weitere, beispielsweise als Hochvolt-Batterien ausgebildete, Energiespeicher können beispielsweise durch ein Steckprinzip einfach positioniert werden, insbesondere indem, wie beschrieben, die Tragkästen aufeinander angeordnet und dabei ineinander gesteckt oder aufeinander gesteckt werden. Beispielsweise können die aufeinander angeordneten und aufeinander gesteckten Tragkästen insbesondere durch außen zugängliche Schraubstellen insbesondere in einem Bandablauf montiert werden, wodurch modular eine zumindest nahezu beliebige Anzahl an Energiespeichern verbaut werden kann, insbesondere unabhängig von einem Produktionsablauf. Somit ermöglicht der vierte Aspekt eine einfache und kostengünstige Positionierung und Montage wenigstens eines oder mehrerer Energiespeicher insbesondere in Fahrzeughochrichtung oberhalb des insbesondere als Leiterrahmen ausgebildeten Fahrzeugrahmens.

Weitere Vorteile, Merkmale und Einzelheiten der Erfindung ergeben sich aus der nachfolgenden Beschreibung bevorzugter Ausführungsbeispiele sowie anhand der Zeichnung.

Die Zeichnung zeigt in:
- Fig. 1: eine schematische und perspektivische Vorderansicht eines Trägers zum Lagern mehrerer elektrischer Energiespeicher an einem Rahmen eines Nutzfahrzeugs;
- Fig. 2: eine schematische und perspektivische Rückansicht des Trägers;
- Fig. 3: ausschnittsweise eine schematische Seitenansicht des Nutzfahrzeugs;
- Fig. 4: eine schematische Seitenansicht des Trägers;
- Fig. 5: eine schematische Vorderansicht des Trägers;
- Fig. 6: eine schematische Perspektivansicht eines auch als Grundträger bezeichneten Grundrahmens des Trägers;
- Fig. 7: eine schematische Perspektivansicht eines als Tragrahmen ausgebildeten Tragkastens des Trägers;
- Fig. 8: eine schematische Perspektivansicht des Trägers; und
- Fig. 9: ausschnittsweise eine schematische Perspektivansicht von zwei nach Art von Getränkekästen aufeinander gestapelten und ineinander gesteckten Tragkästen des Trägers.

In den Fig. sind gleiche oder funktionsgleiche Elemente mit gleichen Bezugszeichen versehen.

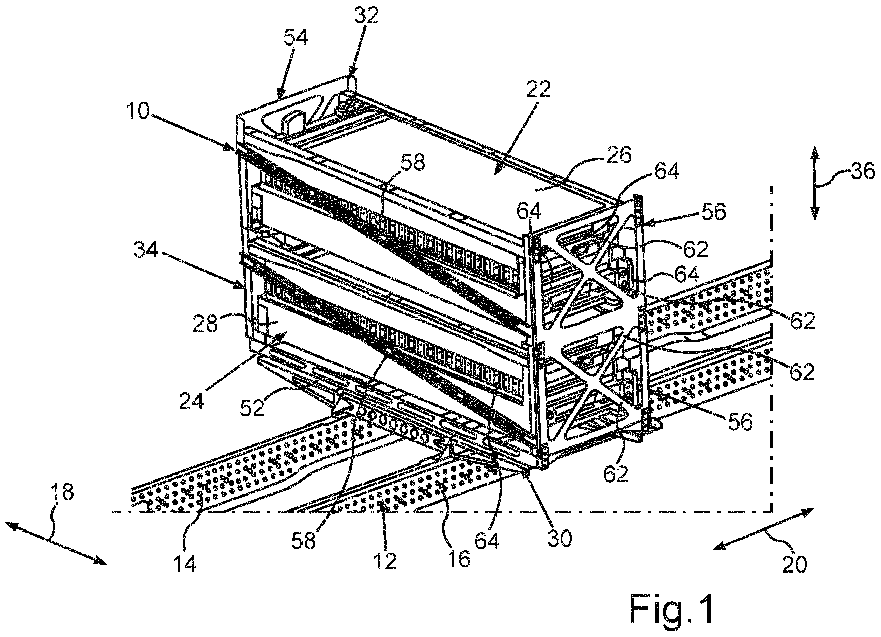

Fig. 1 zeigt in einer schematischen und perspektivischen Vorderansicht einen auch als Trageinrichtung bezeichneten oder als Trageinrichtung ausgebildeten Träger 10 für ein einfach auch als Fahrzeug bezeichnetes Nutzfahrzeug. Dies bedeutet, dass das Nutzfahrzeug in seinem vollständig hergestellten Zustand den Träger 10 aufweist. Das Nutzfahrzeug weist außerdem einen in Fig. 1 ausschnittsweise erkennbaren Rahmen 12 auf, welcher als ein Leiterrahmen ausgebildet ist und auch als Fahrzeugrahmen bezeichnet wird. Der Rahmen 12 (Fahrzeugrahmen) weist zwei in Fahrzeugquerrichtung des Nutzfahrzeugs voneinander beabstandete Längsträger 14 und 16 auf, deren jeweilige Längserstreckungsrichtung in Fahrzeuglängsrichtung des Nutzfahrzeugs verläuft. Die Fahrzeugquerrichtung des Nutzfahrzeugs ist in Fig. 1 durch einen Doppelpfeil 18 veranschaulicht, und die Fahrzeuglängsrichtung des Nutzfahrzeugs ist in Fig. 1 durch einen Doppelpfeil 20 veranschaulicht. Der Träger 10 ist zumindest mittelbar, insbesondere direkt, an dem Rahmen 12 befestigt, insbesondere dadurch, dass der Träger 10 zumindest mittelbar, insbesondere direkt, an den Längsträgern 14 und 16 befestigt ist. Beispielsweise weist der Rahmen 12 wenigstens einen, in Fig. 1 nicht erkennbaren, Querträger auf, über welchen die Längsträger 14 und 16 miteinander verbunden sind, insbesondere derart, dass der Querträger, insbesondere beidenends, an die Längsträger 14 und 16 angebunden ist.

Der Träger 10 weist Aufnahmebereiche 22 und 24 auf, welche jeweils, insbesondere direkt, durch den Träger 10 begrenzt sind. In dem jeweiligen Aufnahmebereich 22, 24 ist ein jeweiliger, elektrischer Energiespeicher 26, 28 angeordnet und somit aufgenommen. Der jeweilige Energiespeicher 26, 28 ist, insbesondere direkt, an dem Träger 10 befestigt, sodass die Energiespeicher 26 und 28 mittels des Trägers 10, insbesondere unter Vermittlung des Trägers 10, an dem Rahmen 12 gelagert und somit gehalten sind. Der jeweilige, elektrische Energiespeicher 26, 28 ist vorzugsweise als eine Hochvolt-Komponente ausgebildet. Insbesondere ist der jeweilige Energiespeicher 26, 28 vorzugsweise als eine Batterie, insbesondere als eine Hochvolt-Batterie, ausgebildet.

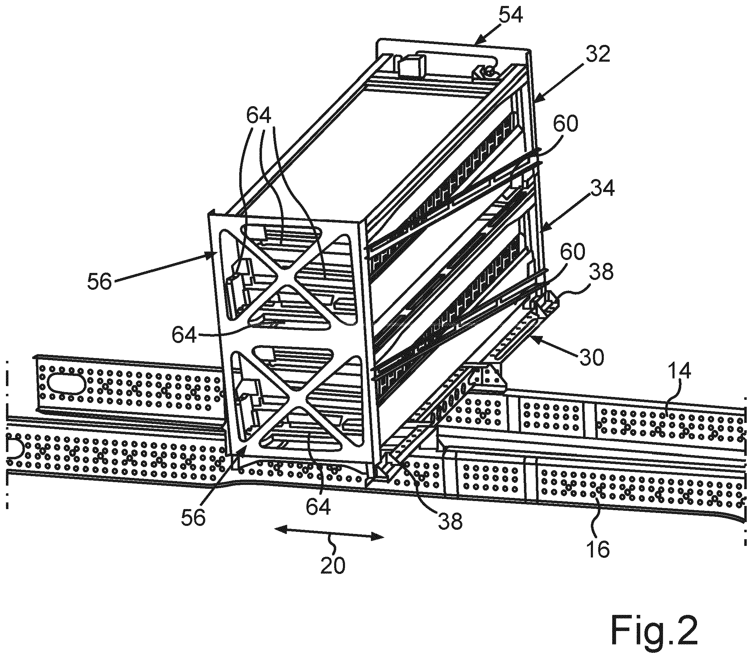

In Zusammenschau mit Fig. 2 bis 4 ist erkennbar, dass der separat von dem Rahmen 12 ausgebildete Träger 10 einen auf den Fahrzeugrahmen (Rahmen 12) aufgesetzten, an dem Rahmen 12, insbesondere an den Längsträgern 14 und 16, befestigten und den Aufnahmebereich 24 in Fahrzeughochrichtung des Nutzfahrzeugs, insbesondere direkt, nach unten begrenzenden Grundrahmen 30 aufweist, welcher auch als Grundträger bezeichnet wird. Des Weiteren weist der Träger 10 wenigstens oder genau zwei separat voneinander und jeweils separat von dem Grundrahmen 30 ausgebildete Tragkästen 32 und 34 auf, wobei der jeweilige Tragkasten 32, 34 auch als Tragrahmen bezeichnet oder als ein Tragrahmen ausgebildet ist. Es ist erkennbar, dass der Aufnahmebereich 24 in Einbaulage des Trägers 10 in Fahrzeughochrichtung des Nutzfahrzeugs nach unten hin, insbesondere direkt, durch den Grundrahmen 30 begrenzt ist. Der Träger 10 nimmt seine Einbaulage in vollständig hergestelltem Zustand des mit dem Träger 10 ausgestalteten Nutzfahrzeugs ein, wobei die Einbaulage des Trägers 10 in den Fig. gezeigt ist. Die Fahrzeughochrichtung des Nutzfahrzeugs ist durch einen Doppelpfeil 36 veranschaulicht.

Der Tragkasten 34 ist, insbesondere in Einbaulage des Trägers 10, in Fahrzeughochrichtung von oben nach unten auf den Grundrahmen 30, insbesondere direkt, aufgesetzt und somit auf dem Grundrahmen 30 angeordnet. Der Tragkasten 34 begrenzt den Aufnahmebereich 24 in Fahrzeugquerrichtung beidseitig, das heißt sowohl nach links als auch nach rechts. Außerdem begrenzt der Tragkasten 34 den Aufnahmebereich 24 in Fahrzeuglängsrichtung beidseitig, das heißt nach vorne und nach hinten. Es ist erkennbar, dass der Tragkasten 32 in Fahrzeughochrichtung auf den Tragkasten 34 aufgesetzt und somit auf dem Tragkasten 34 angeordnet ist, sodass der Tragkasten 34 in Fahrzeughochrichtung zwischen dem Tragkasten 32 und dem Grundrahmen 30 angeordnet ist.

Besonders gut aus Fig. 2, 3 und 4 ist erkennbar, dass der Tragkasten 34 in Fahrzeuglängsrichtung (Doppelpfeil 20) nach hinten hin an dem Grundrahmen 30 über Konsolen 38 abgestützt ist, wobei die Konsolen 38 in Fahrzeugquerrichtung und somit in Längserstreckungsrichtung des Grundrahmens 30 und des jeweiligen Tragkastens 32, 34 voneinander beabstandet sind. Außerdem ist der Tragkasten 34 über die Konsolen 38 an dem Grundrahmen 30 befestigt, insbesondere derart, dass der Tragkasten 34, insbesondere direkt, mit den Konsolen 38 und/oder die Konsolen 38, insbesondere direkt, an dem Grundrahmen 30 befestigt ist beziehungsweise sind.

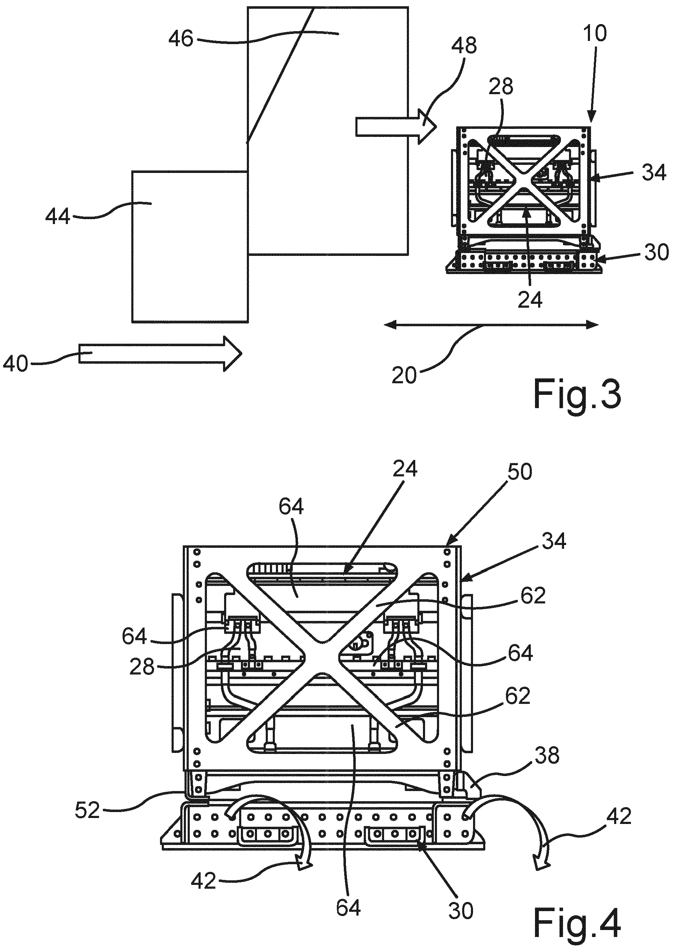

Besonders gut aus Fig. 3 und 4 ist erkennbar, dass die Konsolen 38 dazu ausgebildet sind, bei einer in Fahrzeuglängsrichtung von vorne nach hinten wirkenden und in Fig. 3 durch einen Pfeil 40 veranschaulichten, unfallbedingten Kraftbeaufschlagung in Fahrzeuglängsrichtung nach hinten zu klappen und dadurch eine in Fig. 4 durch Pfeile 42 veranschaulichte und insbesondere als Schwenkbewegung ausgebildete Bewegung des Tragkastens 34 in Fahrzeuglängsrichtung nach hinten freizugeben, mithin zu ermöglichen.

In Fig. 3 ist eine Barriere mit 44 bezeichnet. Beispielsweise bei einer Frontalkollision prallt das Nutzfahrzeug frontal gegen die Barriere 44, woraus die durch den Pfeil 40 veranschaulichte, unfallbedingte Kraftbeaufschlagung resultiert. Aus Fig. 3 ist auch erkennbar, dass das Nutzfahrzeug beispielsweise in seinem vollständig hergestellten Zustand einen Aufbau in Form eines Fahrerhauses 46 aufweist, welches separat von dem Träger 10 und separat von dem Rahmen 12 ausgebildet und an dem Rahmen 12 gelagert ist. Das Fahrerhaus 46 wird auch als Kabine bezeichnet. Durch die Frontalkollision, das heißt durch die aus der Frontalkollision resultierende, unfallbedingte Kraftbeaufschlagung wird beispielsweise das Fahrerhaus 46 in Fahrzeuglängsrichtung nach hinten verlagert, insbesondere relativ zu dem Rahmen 12, wobei diese unfallbedingte Rückverlagerung des Fahrerhauses 46 in Fig. 3 durch einen Pfeil 48 veranschaulicht ist. Außerdem ist aus Fig. 3 erkennbar, dass sich der Träger 10 in Fahrzeuglängsrichtung (Doppelpfeil 20) nach hinten hin an das Fahrerhaus 46 anschließt. Um nun beispielsweise eine übermäßig starke Kollision zwischen dem Fahrerhaus 46 und dem Träger 10 und somit eine übermäßige Belastung des Fahrerhauses 46 und somit eine übermäßige Deformation des Fahrerhauses 46 bei der unfallbedingten Kraftbeaufschlagung zu vermeiden, klappen die Konsolen 38 bei der unfallbedingten Kraftbeaufschlagung in Fahrzeuglängsrichtung nach hinten hin weg, insbesondere relativ zu dem Rahmen 12. In der Folge klappt bei der unfallbedingten Kraftbeaufschlagung der Tragkasten 34, insbesondere ein durch den Tragkasten 34 und den darauf angeordneten Tragkasten 32 gebildeter Turm 50, in Fahrzeuglängsrichtung nach hinten weg und/oder der Tragkasten 34 beziehungsweise der Turm 50 verlagern sich bei der unfallbedingten Kraftbeaufschlagung in Fahrzeuglängsrichtung nach hinten. Mit anderen Worten kann eine Bewegung des Tragkastens 34 beziehungsweise des Turms 50 in Fahrzeuglängsrichtung nach hinten weg von dem Fahrerhaus 46 erfolgen, wodurch eine besonders hohe Sicherheit darstellbar ist.

Aus Fig. 1 und 4 ist erkennbar, dass vorzugsweise der Tragkasten 34 insbesondere in Einbaulage des Trägers 10 in Fahrzeuglängsrichtung nach vorne an einer am Grundrahmen 30 vorgesehenen, insbesondere befestigten, vorderen Anschlagschiene 52 abgestützt ist, wobei beispielsweise der Tragkasten 34 in Fahrzeuglängsrichtung zwischen der vorderen Anschlagschiene 52 und den hinteren Konsolen 38 angeordnet ist.

Bei dem in den Fig. gezeigten Ausführungsbeispiel verläuft die zuvor genannte Längserstreckungsrichtung des Grundrahmens 30 und des jeweiligen Tragkastens 32, 34 in Fahrzeugquerrichtung. Dabei weist der jeweilige Tragkasten 32, 34 in Längserstreckungsrichtung des jeweiligen Tragkastens 32, 34 und somit in Fahrzeugquerrichtung voneinander beabstandete Seitenelemente 54 und 56 auf, durch welche der jeweilige Aufnahmebereich 22, 24 in Fahrzeugquerrichtung beidseitig, insbesondere jeweils direkt, begrenzt ist. Des Weiteren weist der jeweilige Tragkasten 32, 34 eine jeweilige, vordere Strebe 58 auf, durch welche der jeweilige Aufnahmebereich 22, 24 in Fahrzeuglängsrichtung nach vorne hin, insbesondere jeweils direkt, begrenzt ist. Des Weiteren weist der jeweilige Tragkasten 32, 34 eine jeweilige, hintere Strebe 60 auf, durch welche der jeweilige Aufnahmebereich 22, 24 in Fahrzeuglängsrichtung nach hinten hin, insbesondere direkt, begrenzt ist. Die jeweilige Strebe 58, 60 verläuft dabei schräg zur Fahrzeugquerrichtung und schräg zur Fahrzeughochrichtung sowie in einer durch die Fahrzeugquerrichtung und die Fahrzeughochrichtung aufgespannten Ebene. Dadurch kann auf besonders gewichtsgünstige Weise eine besonders hohe Steifigkeit des jeweiligen Tragkastens 32, 34 dargestellt werden. Des Weiteren weist das jeweilige Seitenelement 54, 56 sich überkreuzende Strebenelemente 62 auf, welche insbesondere X-förmig verlaufen, mithin eine X-Form bilden. Hierdurch begrenzen die jeweiligen Strebenelemente 62 des jeweiligen Seitenelements 54, 56 mehrere, dreiecksförmige Durchgangsöffnungen 64 des jeweiligen Seitenelements 54, 56 des jeweiligen Tragkastens 32, 34.

Insbesondere bilden der Grundrahmen 30 und die Tragkästen 32 und 34 ein Baukastensystem, durch welches auf besonders einfache und kostengünstige Weise unterschiedliche Bauvarianten des Trägers 10 beziehungsweise des Turms 50 hergestellt werden können. Dabei ist der Grundrahmen 30 ein bauvariantenübergreifender Grundrahmen, welcher beispielsweise sowohl bei einer ersten der Bauvarianten als auch bei einer zweiten der Bauvarianten verwendet wird. Die Tragkästen 32 und 34 sind Tragrahmen, welche wahlweise miteinander und mit dem Grundrahmen 30 verbindbar und in Fahrzeughochrichtung übereinander anordenbar sind, insbesondere nach Art von Wasserkisten. Bei der ersten Bauvariante werden beispielsweise der Grundrahmen 30 und der Tragkasten 34, nicht jedoch der Tragkasten 32, verwendet, um dadurch beispielsweise genau einen elektrischen Energiespeicher in Form des elektrischen Energiespeichers 28 an dem Rahmen 12 zu lagern. Bei der zweiten Bauvariante werden beispielsweise der Grundrahmen 30 und die Tragkästen 32 und 34, wie in Fig. 1 und 2 dargestellt, verwendet, um dadurch die, insbesondere genau, zwei elektrischen Energiespeicher 26 und 28 an dem Rahmen 12 zu lagern. Dabei ist der Tragkasten 32 auf dem Tragkasten 34 aufgesteckt, sodass die Tragkästen 32 und 34 wie Getränkekisten aufeinander gestapelt und ineinander gesteckt werden können. Dadurch können die Tragkästen 32 und 34 einfach aufeinander aufgesetzt und hierdurch relativ zueinander positioniert werden. Beispielsweise sind die Tragkästen 32 und 34 zerstörungsfrei lösbar miteinander verbunden, insbesondere durch Schraubverbindungen.

Vorzugsweise ist der Tragkasten 34, insbesondere direkt, an der an dem Grundrahmen 30 vorgesehenen, vorderen Anschlagschiene 52 abgestützt und dadurch relativ zu dem Grundrahmen 30 positioniert. Ferner ist der Tragkasten 34 über die hinteren, am Grundrahmen 30 vorgesehenen Konsolen 38 an dem Grundrahmen 30 befestigt. Außerdem ist beispielsweise der Tragkasten 34 über die Anschlagschiene 52 an dem Grundrahmen 30 befestigt. Insbesondere sind die Tragkästen 32 und 34 baugleich ausgebildet.

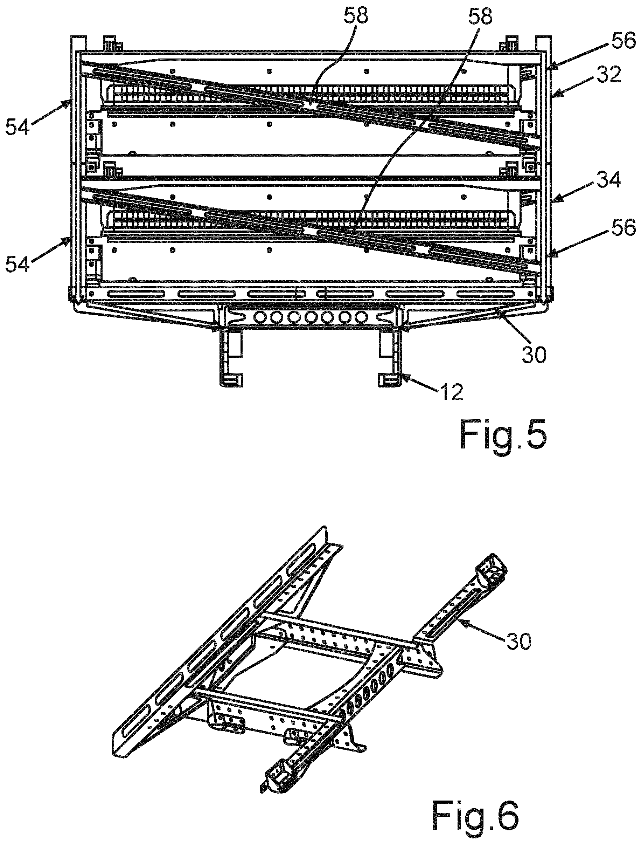

Besonders gut aus Fig. 5 ist erkennbar, dass die Streben 58, 60 die Realisierung besonders vorteilhafter Kraftpfade auf besonders bauraumgünstige Weise ermöglichen.

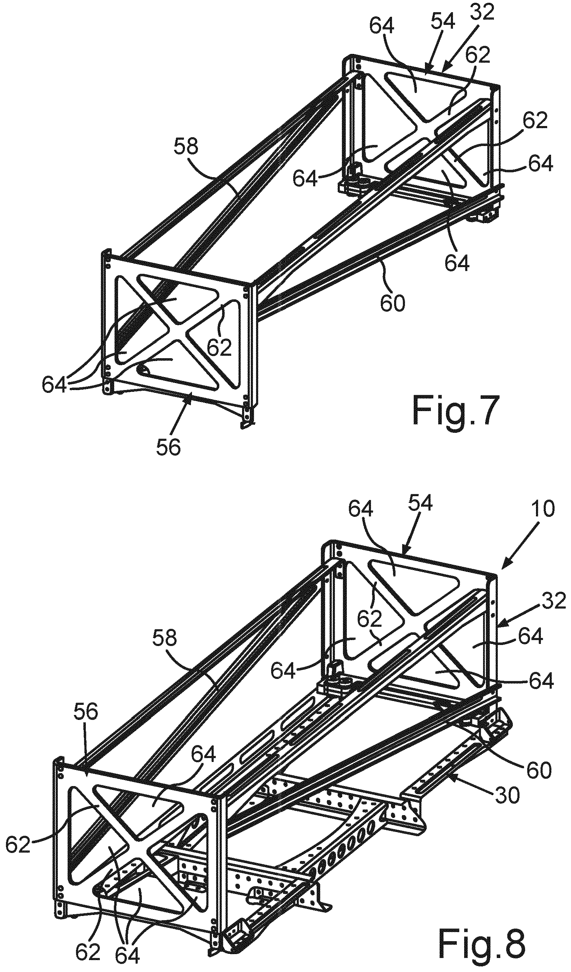

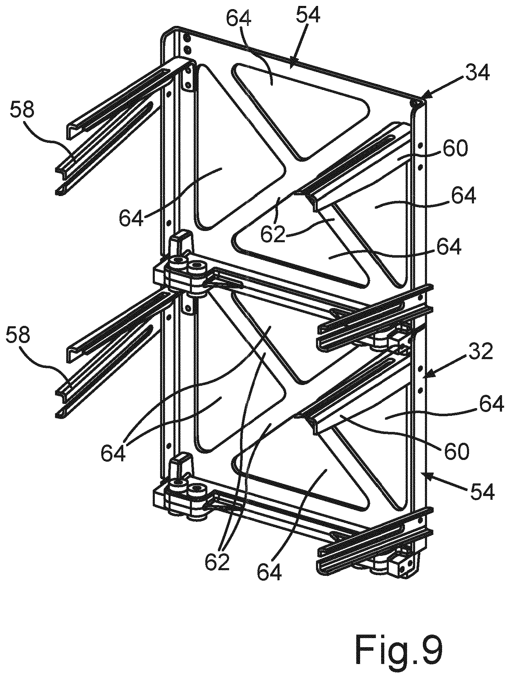

Fig. 6 zeigt in einer schematischen Perspektivansicht den Grundrahmen 30. Fig. 7 zeigt in einer schematischen Perspektivansicht den Tragkasten 32. Fig. 8 zeigt in einer schematischen Perspektivansicht den Träger 10 mit dem Grundrahmen 30 und dem Tragkasten 32, welcher nun insbesondere anstelle des Tragkastens 34, insbesondere direkt, auf dem Grundrahmen 30 aufgesetzt ist. Schließlich zeigt Fig. 9 die nach Art von Getränkekisten oder Getränkekästen direkt aufeinander gestapelten und ineinander gesteckten Tragkästen 32 und 34. Wie aus Fig. 1 und 9 erkennbar ist, kann wahlweise der Tragkasten 32 auf dem Tragkasten 34 oder der Tragkasten 34 auf dem Tragkasten 32 aufgesetzt und dabei insbesondere aufgesteckt werden, um den Träger 10 modular herzustellen beziehungsweise aufzubauen.

### Bezugszeichenliste

- 10: Träger
- 12: Rahmen
- 14: Längsträger
- 16: Längsträger
- 18: Doppelpfeil
- 20: Doppelpfeil
- 22: Aufnahmebereich
- 24: Aufnahmebereich
- 26: elektrischer Energiespeicher
- 28: elektrischer Energiespeicher
- 30: Grundrahmen
- 32: Tragkasten
- 34: Tragkasten
- 36: Doppelpfeil
- 38: Konsole
- 40: Pfeil
- 42: Pfeil
- 44: Barriere
- 46: Fahrerhaus
- 48: Pfeil
- 50: Turm
- 52: Anschlagschiene
- 54: Seitenelement
- 56: Seitenelement
- 58: Strebe
- 60: Strebe
- 62: Strebenelement
- 64: Durchgangsöffnung

## Patentansprüche

1. Träger (10) zum Lagern wenigstens eines elektrischen Energiespeichers (28) an einem Rahmen (12) eines Nutzfahrzeugs, mit einem Aufnahmebereich (24), in welchem der an dem Träger (10) befestigbare, elektrische Energiespeicher (28) aufnehmbar ist, wobei der Träger (10) einen auf den Rahmen (12) aufsetzbaren, an dem Rahmen (12) befestigbaren und den Aufnahmebereich (24) in Einbaulage des Trägers (10) in Fahrzeughochrichtung (36) nach unten begrenzenden Grundrahmen (30) und wenigstens einen separat von dem Grundrahmen (30) ausgebildeten, auf dem Grundrahmen (30) angeordneten und den Aufnahmebereich (24) in Einbaulage des Trägers (10) in Fahrzeugquerrichtung (18) begrenzenden Tragkasten (34) aufweist, **dadurch gekennzeichnet, dass** der Tragkasten in Einbaulage des Trägers (10) in Fahrzeuglängsrichtung (20) nach hinten an dem Grundrahmen (30) über Konsolen (38) abgestützt und an dem Grundrahmen (30) über die Konsolen (38) befestigt ist, welche dazu ausgebildet sind, bei einer in Fahrzeuglängsrichtung (20) nach hinten wirkenden, unfallbedingten Kraftbeaufschlagung (40) in Fahrzeuglängsrichtung (20) nach hinten zu klappen und dadurch eine unfallbedingte Bewegung (42) des Tragkastens (34) in Fahrzeuglängsrichtung (20) nach hinten freizugeben.

2. Träger (10) nach Anspruch 1,
**dadurch gekennzeichnet, dass**
der Tragkasten (34) in Einbaulage des Trägers (10) in Fahrzeuglängsrichtung (20) nach vorne an einer am Grundrahmen (30) vorgesehenen, vorderen Anschlagschiene (52) abgestützt ist.

3. Träger (10) nach Anspruch 2,
**dadurch gekennzeichnet, dass**
der Tragkasten (349 zwischen der vorderen Anschlagschiene (52) und den hinteren Konsolen (38) angeordnet ist.

## Claims

1. A support (10) for storing at least one electrical energy storage device (28) on a frame (12) of a utility vehicle, having a receiving region (24) in which can be received the electrical energy storage devices (28), which that can be fixed to the support (10),
the support (10) having a base frame (30) that delimits the receiving area (24) towards the bottom in the vertical direction of the vehicle (36) when the support (10) is in the installed position and can be placed on and fixed to the frame (12), and having at least one support casing (34) that delimits the receiving area (23) in the transverse direction of the vehicle (18) when the support (10) is in the installed position and is designed separately from and arranged on the base frame (30),
**characterised in that**
when the support (10) is in the installed position the support casing (34) is braced to the rear in the longitudinal direction of the vehicle (20) against the base frame (30) by brackets (38) and fixed to the base frame (30) by these brackets (38), which are designed to fold backwards in the longitudinal direction of the vehicle (20) in the event of an accident-related impact (40) acting rearwards in the longitudinal direction of the vehicle (20) and thereby to enable an accident-related movement (42) of the support casing (34) rearwards in the longitudinal direction of the vehicle (20).

2. A support (10) according to claim 1,
**characterised in that**
when the support (10) is in the installed position the support casing (34) is braced to the front in the longitudinal direction of the vehicle (20) against a front stop rail (52) provided on the base frame (30).

3. A support (10) according to claim 2,
**characterised in that**
the support casing (34) is arranged between the front stop rail (52) and the rear mounting brackets (38).

## Revendications

1. Support (10) pour le stockage d'au moins un accumulateur d'énergie électrique (28) sur un châssis (12) d'un véhicule utilitaire, avec une région de réception (24) dans laquelle peut être reçu l'accumulateur d'énergie électrique (28) pouvant être fixé sur le support (10),
dans lequel le support (10) présente un cadre de base (30) pouvant être posé sur le châssis (12), pouvant être fixé au châssis (12) et délimitant vers le bas la région de réception (24) dans la position d'encastrement du support (10) dans la direction haute de véhicule (36) et au moins une caisse porteuse (34) réalisée séparément du cadre de base (30), disposée sur le cadre de base (30) et délimitant la région de réception (24) dans la position d'encastrement du support (10) dans la direction transversale de véhicule (18),
**caractérisé en ce que** la caisse porteuse est appuyée dans la position d'encastrement du support (10) dans la direction longitudinale de véhicule (20) vers le bas sur le cadre de base (30) par le biais de consoles (38) et fixée au cadre de base (30) par le biais des consoles (38) qui sont réalisées pour se replier vers le bas dans la direction longitudinale de véhicule (20) lors d'une sollicitation de force (40) relative à un accident, agissant vers le bas dans la direction longitudinale de véhicule (20) et pour libérer de ce fait vers le bas un mouvement relatif à un accident (42) de la caisse porteuse (34) dans la direction longitudinale de véhicule (20).

2. Support (10) selon la revendication 1,
**caractérisé en ce que**
la caisse porteuse (34) est appuyée dans la position d'encastrement du support (10) dans la direction longitudinale de véhicule (20) vers l'avant sur un rail de butée avant (52) prévu sur le cadre de base (30).

3. Support (10) selon la revendication 2,
**caractérisé en ce que**
la caisse porteuse (34) est disposée entre le rail de butée avant (52) et les consoles arrière (38).
